# EUROPEAN PATENT APPLICATION

(11) **EP 4 492 272 A1**
(43) Date of publication of application: **15.01.2025**
(21) Application number: 23766297.8
(22) Date of filing: 11.01.2023
(51) Int. Cl.: G06F 30/10, G06F 30/23

(54) **DESIGN SUPPORTING DEVICE AND DESIGN SUPPORTING METHOD**

(30) Priority: 10.03.2022 JP 2022037577
(71) Applicant: Hitachi, Ltd., Tokyo 100-8280 (JP)
(72) Inventor: KITAOKA Masanori, Tokyo 100-8280 (JP); MIZOTA Hirohisa, Tokyo 100-8280 (JP)
(74) Representative: Mewburn Ellis LLP
(86) International application number: PCT/JP2023/000484
(87) International publication number: WO 2023/171116

(57) **Abstract**

Provided are: a defect imparting unit (132) that sets a defect in a shape model of a structure in consideration of inspection; an inspection signal calculation unit (134) that virtually sets a sensor unit for inspecting a set defect with respect to a shape model on a basis of a sensor unit setting condition that is a predetermined condition, and performs inspection simulation of a defect by a virtually set sensor unit with a plurality of defect properties; a detection probability calculation unit (135) that calculates a defect detection probability that is a probability of detecting a defect; and a shape correction unit (142) that corrects a shape model on a basis of a defect detection probability.

## Description

### Technical Field

The present invention relates to a technique of a design supporting device and a design supporting method.

### Background Art

In the design of a railway, an automobile, an aircraft, and the like, it is desired to reduce the weight of a structure. However, in general, it is not preferable to simply reduce the weight of the structure since the strength decreases. Therefore, a shape optimization method such as topology optimization is known as a method for supporting design of a structure that achieves weight reduction while satisfying desired rigidity.

For example, PTL 1 discloses a design supporting device and a design supporting program "A design supporting device 1 includes a storage unit 21 in which a plurality of unit structure models having different volume densities and material physical property values are stored in association with parameters related to volume densities and material physical property values, an optimization processing unit 22 that acquires an external shape of a structure and required characteristics as input data and outputs, as an analysis result, a strength distribution or a density distribution of the structure satisfying the required characteristics and realizing a reduction in mass, a model selection unit 23 that selects a corresponding unit structure model from among the plurality of unit structure models stored in the storage unit 21 on the basis of the analysis result of the optimization processing unit 22, and an internal structure determination unit 28 that determines an internal structure of the structure by imparting the selected unit structure model to a corresponding location of the structure." (see Abstract).

### Citation List

### Patent Literature

PTL 1: JP 2019-153210 A

### Summary of Invention

### Technical Problem

In general, when the shape of a structure is determined using a shape optimization method, the shape becomes complicated. As a method for manufacturing a structure having such a complicated shape, processes such as molding, lamination, and adhesion of an integrated structure using a three-dimensional printer are used.

A structure having a complex shape to which a shape optimization method is applied may also have a defect during manufacturing or a defect due to a load applied during use. Therefore, similarly to the conventional structure, it is necessary to guarantee reliability by performing inspection at the time of shipment or operation.

On the other hand, as the shape becomes complicated, the propagation path of the sensing physical quantity in the inspection becomes complicated, and there is a concern that it becomes difficult to ensure sensor accessibility. For example, even if a position where a defect occurs due to a load is inside the structure and ultrasonic inspection is suitable as an inspection method, there may be a case where there is no surface on which an ultrasonic probe is installed. Alternatively, even if the ultrasonic probe can be installed, the ultrasonic wave may be reflected, refracted, or scattered by the wall surface of the structure, and a reflected signal from the defect may not be obtained.

The present invention has been made in view of such a background, and an object of the present invention is to support structural design in consideration of inspection.

### Solution to Problem

In order to solve the above-described problems, the present invention includes: a defect setting unit that sets a defect in a shape model of a structure; an inspection analysis unit that virtually sets a sensor unit for inspecting the set defect with respect to the shape model on a basis of a sensor unit setting condition that is a predetermined condition, and calculates a defect detection probability that is a probability of detecting the defect by performing an inspection simulation of the defect by the virtually set sensor unit for each defect property indicating a property of the defect; and a shape model correction unit that corrects the shape model on a basis of the defect detection probability.

Other solutions will be appropriately described in the embodiments.

### Advantageous Effects of Invention

According to the present invention, it is possible to support structural design in consideration of inspection.

### Brief Description of Drawings

[FIG. 1] FIG. 1 is a functional block diagram of a design supporting device according to the present embodiment.
[FIG. 2] FIG. 2 is a diagram illustrating a hardware configuration of the design supporting device according to the present embodiment.
[FIG. 3A] FIG. 3A is a diagram illustrating an example of CAD data input to a CAD data input processing unit.
[FIG. 3B] FIG. 3B is a diagram illustrating an example of a shape model after being converted by a shape conversion unit.
[FIG. 4] FIG. 4 is a diagram illustrating an example of stress distribution calculated by a structural analysis unit.
[FIG. 5] FIG. 5 is a diagram illustrating a configuration example of a defect database.
[FIG. 6] FIG. 6 is a conceptual diagram illustrating processing of a defect imparting unit.
[FIG. 7] FIG. 7 is a diagram illustrating a configuration example of an inspection database.
[FIG. 8A] FIG. 8A is a conceptual diagram (irradiation wave) illustrating an example of processing executed by an inspection signal calculation unit.
[FIG. 8B] FIG. 8B is a conceptual diagram (reflected wave) illustrating an example of processing executed by the inspection signal calculation unit.
[FIG. 9] FIG. 9 is a conceptual diagram illustrating an example of a signal intensity distribution which is a calculation result by the inspection signal calculation unit.
[FIG. 10] FIG. 10 is a diagram illustrating an example of a defect detection probability calculated by a detection probability calculation unit.
[FIG. 11] FIG. 11 is an overall flowchart illustrating a procedure of a design supporting method according to the present embodiment.
[FIG. 12] FIG. 12 is a flowchart illustrating a procedure of calculating a defect detection probability according to the present embodiment.
[FIG. 13] FIG. 13 is a view illustrating an example of a display screen.

### Description of Embodiments

Next, modes for carrying out the present invention (referred to as "embodiments") will be described in detail with reference to the drawings as appropriate.

Hereinafter, embodiments of the invention will be described using the drawings. In the drawings, the same configurations are denoted by the same reference numerals, and detailed description of overlapping portions will be omitted.

### (Configuration of design supporting device 1)

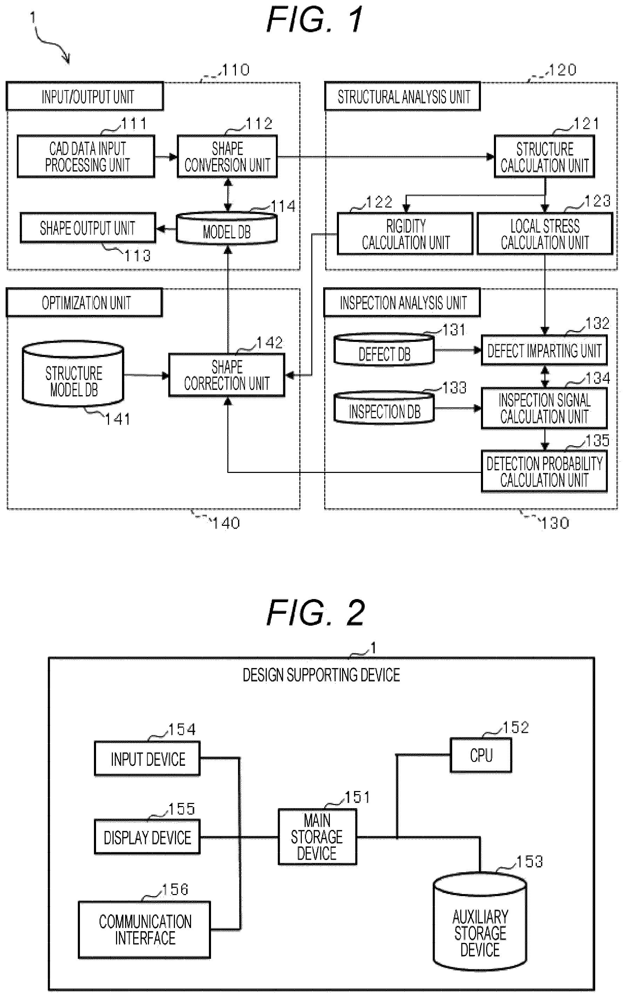

FIG. 1 is a functional block diagram of a design supporting device 1 according to the present embodiment.

As illustrated in FIG. 1, the design supporting device 1 includes an input/output unit 110, a structural analysis unit 120, an inspection analysis unit 130, and an optimization unit (shape model correction unit) 140.

The input/output unit 110 includes a CAD data input processing unit 111, a shape conversion unit 112, a shape output unit 113, and a model database (DB) 114.

The structural analysis unit 120 includes a structure calculation unit 121, a rigidity calculation unit 122, and a local stress calculation unit 123.

The inspection analysis unit 130 further includes a defect database (DB) 131, a defect imparting unit (defect setting unit) 132, an inspection database (DB) 133, an inspection signal calculation unit 134, and a detection probability calculation unit 135.

The optimization unit 140 includes a structure model database (DB) 141 and a shape correction unit (shape model correction unit) 142.

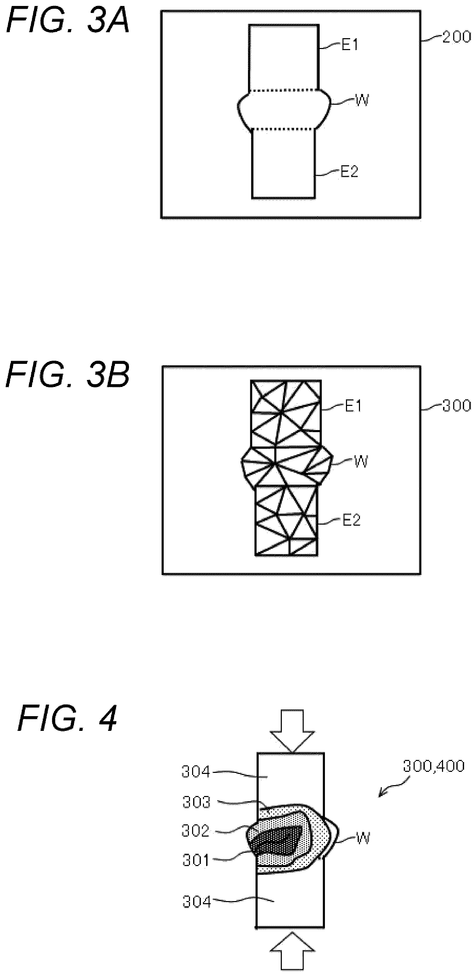

Each element constituting each of the units 110 to 140 in the design supporting device 1 will be described in detail with reference to FIG. 3A and subsequent drawings. A flow of information indicated by arrows in FIG. 1 will also be described in a flowchart to be described later.

### (Hardware configuration of design supporting device 1)

FIG. 2 is a diagram illustrating a hardware configuration of the design supporting device 1 according to the present embodiment.

The design supporting device 1 of the present embodiment is constituted by a computer, and includes a main storage device 151 constituted by a random access memory (RAM) or the like, a central processing unit (CPU) 152, and an auxiliary storage device 153. The design supporting device 1 further includes an input device 154, a display device (output unit) 155, and a communication interface 156.

The auxiliary storage device 153 stores a program executed by the CPU 152, data referred to by the program, and the like. The main storage device 151 functions as a work area when each program is executed. The input device 154 includes a keyboard, a mouse, and the like. The display device 155 includes a liquid crystal display device or the like that displays data. The communication interface 156 is a device for connecting to a communication network. These units 151 to 156 are connected via a bus, for example. Examples of the auxiliary storage device 153 include a magnetic disk, a magneto-optical disk, a semiconductor memory, and the like.

As an example, a series of processes for realizing various functions constituting the present embodiment is stored in the auxiliary storage device 153 in the form of a program. The CPU 152 reads these programs to the main storage device 151 and executes information processing/arithmetic processing, thereby implementing various functions of each of the units 110 to 140 illustrated in FIG. 1. In addition to a form in which the program is installed in advance in the auxiliary storage device 153, a form in which the program is provided in a state of being stored in another computer-readable storage medium may be applied. Alternatively, a form or the like in which the program is distributed via a wired or wireless communication means may be applied. Examples of the computer-readable storage medium include a magnetic disk, a magneto-optical disk, a CD-ROM, a DVD-ROM, and a semiconductor memory.

The model database 114, the defect database 131, the inspection database 133, and the structure model database 141 in FIG. 1 are stored in the auxiliary storage device 153 in FIG. 2. However, the model database 114, the defect database 131, the inspection database 133, and the structure model database 141 may be held in a database server different from the design supporting device 1.

### (Input/output unit 110)

Returning to the description of FIG. 1, the input/output unit 110 will be described.

The CAD data input processing unit 111 constituting the input/output unit 110 is an interface through which the designer inputs CAD data 200 (see FIG. 3A) of the structure. The CAD data input processing unit 111 has functions equivalent to those of generally known CAD software, such as loading data stored in advance in the auxiliary storage device 153 onto a program via file specification by a designer and editing on a screen. The CAD data 200 includes, as attribute data, physical property values (Young's modulus, Poisson's ratio, rigidity modulus, density, and the like) imparted to each part of the structure. The CAD data 200 will be described later.

### (Shape conversion unit 112)

The shape conversion unit 112 constituting the input/output unit 110 generates a shape model 300 (see FIG. 3B) by converting the CAD data 200 input to the CAD data input processing unit 111 into a format that can be used by the structural analysis unit 120 and the inspection analysis unit 130 to be described later. Then, the shape conversion unit 112 holds the generated shape model 300 in the main storage device 151 (see FIG. 2) and stores the same in the model database 114.

### (Examples of CAD data 200 and shape model 300)

Hereinafter, processing of the input/output unit 110 will be described with reference to FIGS. 3A and 3A. FIG. 1 is referred to as appropriate.

FIG. 3A is a diagram illustrating an example of the CAD data 200 input to the CAD data input processing unit 111. FIG. 3B is a diagram illustrating an example of the shape model 300 after being converted by the shape conversion unit 112.

FIG. 3A illustrates the solid data before the conversion by the shape conversion unit 112, and FIG. 3B illustrates the shape model (mesh data) 300 after the conversion by the shape conversion unit 112.

The CAD data 200 input to the CAD data input processing unit 111 is generally a solid model including a plane, a cylinder, a cone, and the like as illustrated in FIG. 3A. The format available in the structural analysis unit 120 and the inspection analysis unit 130 is a mesh model used in an analysis technique such as a finite element method as illustrated in FIG. 3B. The solid model is converted into the mesh model by using a program called a mesher or the like. The shape data of the structure after being converted into the mesh model is referred to as a shape model 300.

In the present embodiment, as illustrated in FIGS. 3A and 3B, an example of performing design support for a structure in which two components E1 and E2 are welded is illustrated. The two components E1 and E2 are welded at a welded portion W.

As described above, the shape conversion unit 112 holds the converted shape model 300 in the main storage device 151 (see FIG. 2) and also in the model database 114. The shape model 300 held in the model database 114 is read by the shape conversion unit 112 as appropriate. The shape model 300 read by the shape conversion unit 112 is sent to the structure calculation unit 121.

### (Shape output unit 113)

Returning to the description of FIG. 1, the shape output unit 113 will be described.

The shape output unit 113 constituting the input/output unit 110 displays the shape model 300 (see FIG. 3B) held in the model database 114 on the display device 155. The shape model 300 may be three-dimensionally displayed on the display device 155 (see FIG. 2) including a liquid crystal display device or the like, or the shape model 300 may be stored as a file in a storage medium such as the auxiliary storage device 153 (see FIG. 2).

### (Structural analysis unit 120)

Next, returning to the description of FIG. 1, the structural analysis unit 120 will be described.

The structure calculation unit 121 constituting the structural analysis unit 120 performs structure analysis by a finite element method (FEM) using the shape model 300 sent from the shape conversion unit 112, and holds an analysis result in the main storage device 151 (see FIG. 2).

### (Rigidity calculation unit 122)

The rigidity calculation unit 122 constituting the structural analysis unit 120 calculates the rigidity of the structure that is the basis of the shape model 300 (see FIG. 3B). From the analysis result by the structure calculation unit 121, the rigidity calculation unit 122 calculates the rigidity of the structure, which is the most general objective function of the structure and is referred to by the optimization unit 140 described later. The rigidity calculation unit 122 calculates, for example, characteristic values such as flexural rigidity and torsional rigidity.

### (Local stress calculation unit 123)

The local stress calculation unit 123 constituting the structural analysis unit 120 extracts the local stress distribution of the structure from the analysis result held by the structure calculation unit 121. The local stress distribution is calculated as a distribution of equivalent stresses such as a stress tensor, a main stress, and a Mises stress.

### (Example of stress distribution)

The processing of the local stress calculation unit 123 will be described with reference to FIG. 4.

FIG. 4 is a diagram illustrating an example of a stress distribution calculated by the local stress calculation unit 123.

In the shape model 300 illustrated in FIG. 4 and subsequent drawings, the mesh illustrated in FIG. 3B is not illustrated.

FIG. 4 illustrates a stress distribution (reference numerals 301 to 304) in the welded portion W when a load (white arrow in FIG. 4) is applied to the structure indicated by the shape model 300. In the example illustrated in FIG. 4, stress is shown in four stages. In the portion to which the stress is applied, the portion indicated by reference numeral 301 has the largest stress, and the portion indicated by reference numeral 304 has the weakest stress. The load application method is set on the basis of a load generated during use of a similar product or a load determined to be generated by the user on the basis of experience. The calculated stress distribution (reference numerals 301 to 304) is included in the shape model 300 as attribute data. As illustrated in FIG. 4, the shape model 300 to which the result of the stress analysis is imparted is appropriately referred to as a stress analysis result 400. In this manner, the local stress calculation unit 123 calculates the local stress in the structure on the basis of the shape model 300.

### (Inspection analysis unit 130)

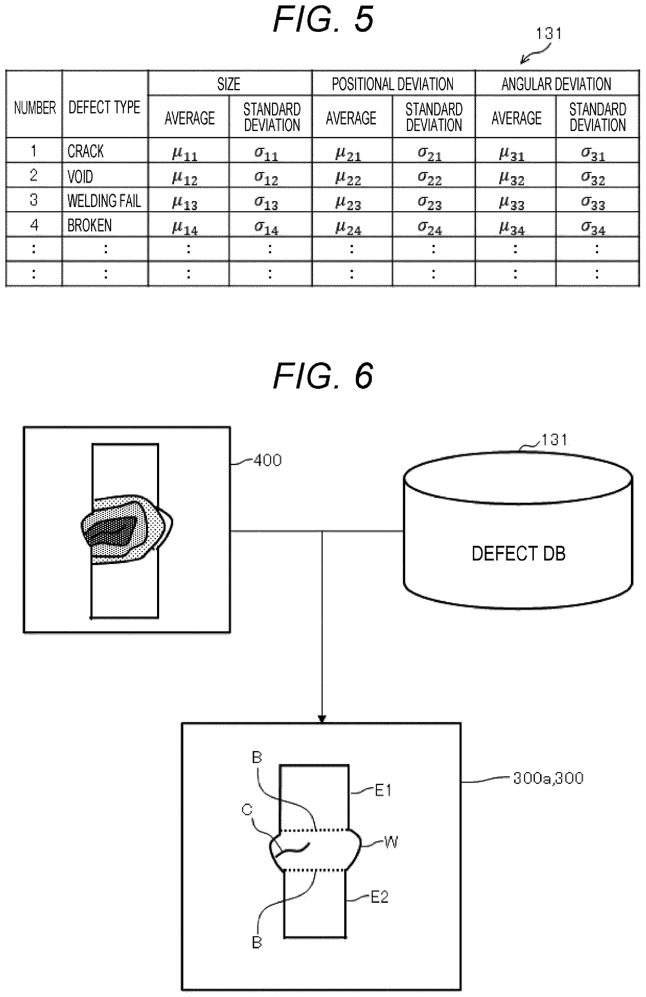

Hereinafter, the defect database 131, the defect imparting unit 132, the inspection database 133, the inspection signal calculation unit 134, and the detection probability calculation unit 135 constituting the inspection analysis unit 130 illustrated in FIG. 1 will be described in detail with reference to FIGS. 5 to 10. FIG. 1 is referred to as appropriate.

### (Defect database 131)

FIG. 5 is a diagram illustrating a configuration example of the defect database 131.

The defect database 131 includes defect information such as a defect type, a size, a positional deviation, and an angular deviation. Here, the defect type is defect type information. The size is the size of the defect. The positional deviation is information regarding a defect occurrence position. Specifically, the positional deviation indicates a positional deviation with respect to the sensor. The angular deviation is information used in a case where the defect has a direction, such as a crack, and is information regarding an occurrence angle of the defect.

Then, in the defect database 131, a parameter (probability distribution) of a probability distribution such as an average or a standard deviation is held for each defect property such as a size, a positional deviation, and an angular deviation. For example, regarding the crack, an average value, a standard deviation, an average of positional deviation, a standard deviation, an average of angular deviation, and a standard deviation of the size of the crack in the target structure are stored in the defect database 131.

The defect database 131 stores averages and standard deviations of sizes, positional deviations, and angular deviations of voids, poor penetration, broken pieces, and the like in addition to cracks. Each piece of information stored in the defect database 131 is specified from a manual input or a candidate by the user. The designation from the candidates means that appropriate data is input to the defect database 131 from experimental data or the like acquired in advance.

### (Defect imparting unit 132)

Next, processing performed by the defect imparting unit 132 illustrated in FIG. 1 will be described with reference to FIG. 6.

FIG. 6 is a conceptual diagram illustrating processing of the defect imparting unit 132.

As illustrated in FIG. 6, the defect imparting unit 132 imparts information of the defect database 131 on the basis of the stress analysis result 400 sent from the local stress calculation unit 123 and creates a shape model 300a (300) including defect information (crack C in the example of FIG. 6) and a boundary condition. The boundary condition is information regarding a condition related to the boundary B between the components E1 and E2 and the welded portion W.

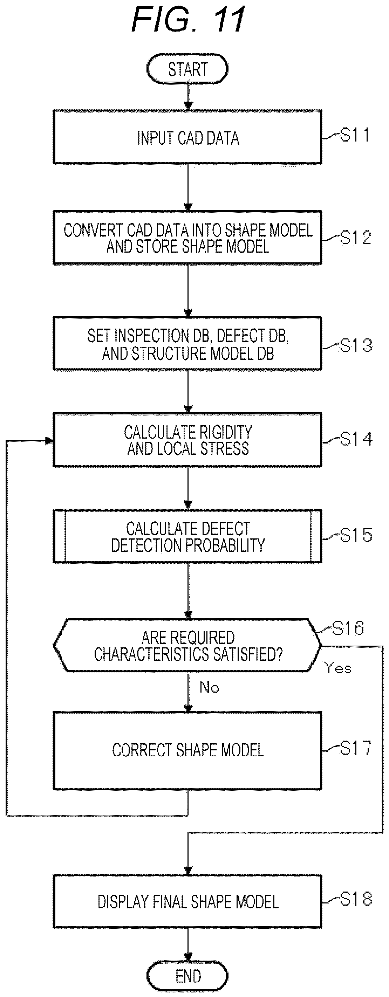

FIG. 6 illustrates a shape model 300a which is the shape model 300 in which a state in which a crack C as a defect occurs in a welded portion W (see FIG. 3B) is reflected in the shape model 300. At this time, the defect imparting unit 132 may automatically impart the occurrence position of the crack C to a place where the stress is large or the like on the basis of the analysis result of the local stress calculation unit 123. Specifically, on the basis of the stress distribution calculated in step S14 in FIG. 11, the defect imparting unit 132 selects a defect occurrence position on the basis of a quantitative index indicating that a defect may occur, such as a stress concentration coefficient, a stress expansion coefficient, or a maximum value of equivalent stress, and a defect type of the defect database 131. Alternatively, the defect imparting unit 132 may impart a defect to the shape model 300 by the user manually designating a position where it is determined that a risk (crack C in the case of FIG. 6) is to occur on the basis of the analysis result of the local stress calculation unit 123. In this manner, the defect imparting unit 132 sets a defect in the shape model 300 of the structure. That is, the defect imparting unit 132 sets the defect occurrence position on the basis of the local stress of the structure calculated by the local stress calculation unit 123.

After the inspection signal calculation unit 134 (see FIG. 1) determines the installation position of the sensor, the defect imparting unit 132 probabilistically samples the size of the crack C, the deviation from the designated position, the occurrence angle, and the like using the information in the defect database 131. That is, the defect imparting unit 132 causes a statistical fluctuation based on the defect information of the defect database 131 with respect to the defect property such as the size, the position (positional deviation), and the angle (angular deviation) with respect to the set crack C.

### (Inspection database 133)

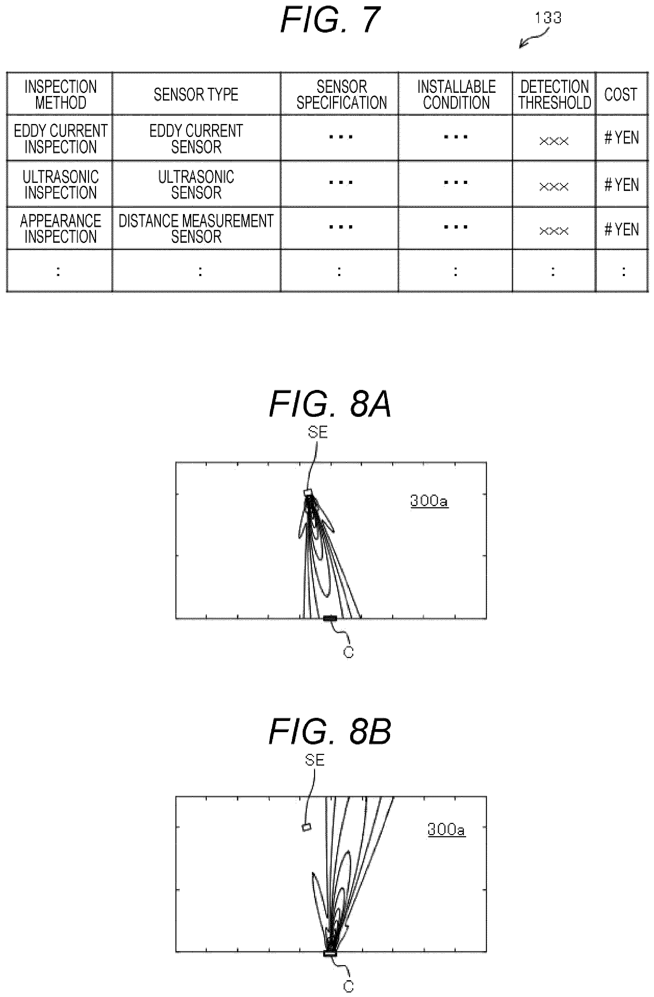

FIG. 7 is a diagram illustrating a configuration example of the inspection database 133.

The inspection database 133 stores information regarding an inspection method, a sensor type, a sensor specification, an installable condition (sensor unit setting condition), a detection threshold, and a cost.

In the inspection method, methods of inspection such as eddy current inspection, ultrasonic inspection, and appearance inspection are stored.

The sensor type (inspection method) stores information (candidates of sensors usable in the inspection method) of the sensor type corresponding to the inspection method such as an eddy current sensor, an ultrasonic sensor, and a distance measurement sensor used in appearance inspection.

The sensor specification stores information related to a specification of a sensor (sensor unit) such as an opening, a drive frequency, and the like.

The installable condition (installation condition of a sensor) stores conditions under which a target sensor can be installed, such as flatness of a structure and an installable space size.

The detection threshold is a detection threshold of a sensor used when a defect detection probability to be described later is calculated, and the cost is information related to cost for installation of the sensor.

When the user selects an inspection method, a sensor type or the like to be used is determined.

### (Inspection signal calculation unit 134)

FIGS. 8A and 8B are conceptual diagrams illustrating an example of processing executed by the inspection signal calculation unit 134. FIG. 8A illustrates an irradiation wave, and FIG. 8B illustrates a reflected wave.

Here, ultrasonic inspection will be described as an example. The inspection signal calculation unit 134 specifies the installation position (sensor installation position SE) of the sensor (ultrasonic sensor in the example illustrated in FIG. 8) from the shape model 300a of the structure. The sensor installation position SE is a virtual installation position.

Specifically, first, the inspection signal calculation unit 134 specifies a position where the sensor can be installed (installable position) by performing optimization calculation by the inspection signal calculation unit 134 on the basis of the shape model 300a, the position of the defect (crack C in the examples of FIGS. 8A and 8B), the installable condition of the inspection database 133 (see FIG. 7), and the like. For example, in a case where the sensor is an ultrasonic sensor, the inspection signal calculation unit 134 analyzes how the ultrasonic wave propagates, calculates a position where the ultrasonic sensor can be installed on the basis of the analysis result, and calculates the optimum calculation position to specify the installable position of the ultrasonic sensor. A plurality of installable positions may be specified. **In** a case where a plurality of installable positions are specified, the inspection signal calculation unit 134 selects one sensor installation position SE from the plurality of installable positions. Then, the inspection signal calculation unit 134 virtually installs the sensor at the selected sensor installation position SE. **In** this manner, the inspection signal calculation unit 134 virtually sets a sensor for inspecting the set defect in the shape model 300a under an installable condition that is a predetermined condition.

As described above, after determination of the sensor installation position SE by the inspection signal calculation unit 134, random sampling of the defect property is performed by the defect imparting unit 132.

Among the installable positions, the unselected positions are sequentially selected after the processing for the selected positions is completed.

The inspection signal calculation unit 134 executes propagation analysis simulation on the sensor corresponding to the selected inspection method, the determined virtual installation position of the sensor (the sensor installation position SE in FIGS. 8A and 8B), and the defect property imparted in accordance with the probability distribution of the defect database 131. In the example illustrated in FIGS. 8A and 8B, the propagation analysis simulation (hereinafter, appropriately referred to as simulation: inspection simulation) of an ultrasonic wave with respect to the crack C by the ultrasonic sensor set in the shape model 300a is executed. That is, in the example illustrated in FIGS. 8A and 8B, the ultrasonic sensor is virtually installed on the surface of the structure. As described above, FIG. 8A illustrates a simulation result in a case where an ultrasonic wave is emitted from the ultrasonic sensor, and FIG. 8B illustrates a simulation result of a reflected wave.

With such calculation, the signal strength (response signal intensity) of the response received by the sensor (the response to the defect by the virtually set sensor: the reflected wave in the example of FIG. 8B) can be calculated by simulation. The calculation performed by the inspection signal calculation unit 134 can be realized using a general physical simulation method. In this way, a response to the defect by the virtually set sensor is calculated by simulation.

### (Signal intensity distribution)

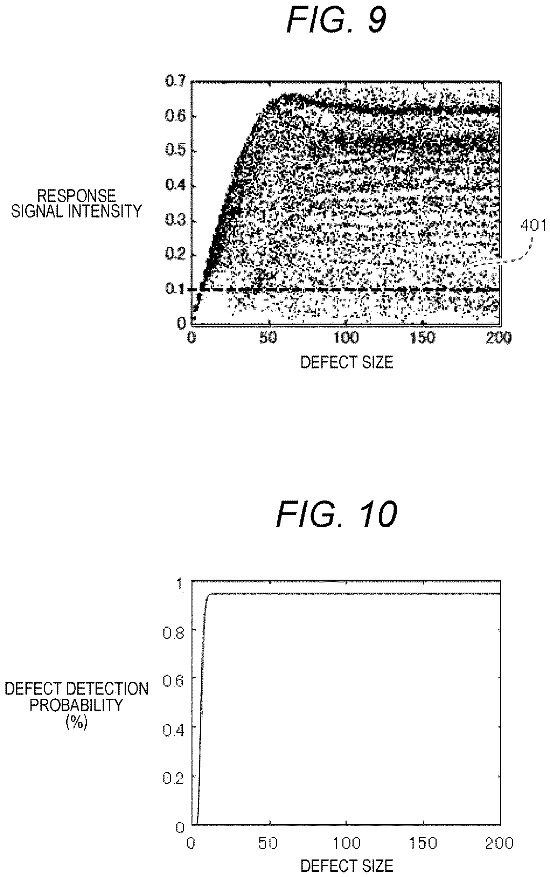

FIG. 9 is a conceptual diagram illustrating an example of a signal intensity distribution which is a calculation result by the inspection signal calculation unit 134.

The inspection signal calculation unit 134 performs calculation by repeated simulation on the basis of the defect property (a plurality of defect properties) randomly sampled by the defect imparting unit 132, the inspection condition set with reference to the inspection database 133 and the like, and the installation position of the sensor. The defect property indicates the property of the defect, and is the size, position, and angle of the defect. The inspection condition is information including a type (sensor type) of a sensor to be used, a specification of the sensor, and the like.

That is, the inspection signal calculation unit 134 simulates the response signal intensity when the inspection is performed with respect to the sizes of various defects and the position and angle of the defect with respect to the sensor on the basis of the information of the size, the positional deviation, and the angular deviation of the defect stored in the defect database 131 and the inspection condition of the inspection database 133. That is, the inspection signal calculation unit 134 simulates the defect by the virtually set sensor for each defect property indicating the property of the defect. As a result, the inspection signal calculation unit 134 calculates the response signal intensity of the sensor to the defect size by so-called Monte Carlo calculation. With this calculation, as illustrated in FIG. 9, the signal intensity distribution reflecting information such as uncertainty of the defect occurrence condition and the possibility of sensor installation is obtained. In FIG. 9, each one of the plots shows the response signal intensity simulated by Monte Carlo calculation performed on various defect properties.

A broken line 401 in FIG. 9 is a threshold for determining the presence or absence of detection by the sensor when calculating the defect detection probability illustrated in FIG. 10. Incidentally, a threshold indicated by the broken line 401 is a detection threshold stored in the inspection database 133 illustrated in FIG. 7.

### (Detection probability calculation unit 135)

FIG. 10 is a diagram illustrating an example of the defect detection probability calculated by the detection probability calculation unit 135.

The detection probability calculation unit 135 calculates a detection probability (defect detection probability) that is a probability of detecting a defect on the basis of a calculation result of the inspection signal calculation unit 134. The detection probability calculation unit 135 estimates the defect detection probability as illustrated in FIG. 10 using the signal intensity distribution as illustrated in FIG. 9. As a method for estimating the defect detection probability as illustrated in FIG. 10 from the signal intensity distribution as illustrated in FIG. 9, a maximum likelihood estimation method (statistical analysis of virtual response) such as a Berans method or a Hit/Miss method is known.

Although the case where the ultrasonic sensor is used is exemplified here, the defect detection probability can be calculated by similar processing even in a case where a sensor other than the ultrasonic sensor (Eddy current sensor, distance measurement sensor, and the like) is used. Although the defect detection probability with respect to the size of the defect (defect size) is obtained in FIG. 10, the defect detection probability with respect to the installation position of the sensor or the installation angle of the sensor with respect to the defect may be obtained.

### (Configuration and processing of optimization unit 140)

Returning to the description of FIG. 1, the optimization unit 140 will be described.

The optimization unit 140 corrects the shape of the structure that satisfies the predetermined required characteristic on the basis of the defect detection probability calculated by the detection probability calculation unit 135, the flexural rigidity calculated by the rigidity calculation unit 122, and rigidity information such as torsional rigidity. Specifically, the optimization unit 140 corrects the shape model 300 (see FIG. 3B) so that the mass becomes small while the rigidity calculated by the rigidity calculation unit 122 of the structural analysis unit 120 and the defect detection probability calculated by the detection probability calculation unit 135 of the inspection analysis unit 130 satisfy the required characteristics. The required characteristics will be described later.

### (Structure model database 141)

The structure model database 141 stores required characteristics as various conditions necessary for optimizing the structure. Examples of the required characteristic include a constraint condition, an objective function (required condition), and the like.

As the objective function stored in the structure model database 141, there is an objective function related to mechanical characteristics satisfied by the structure. For example, the objective function includes characteristic values such as flexural rigidity and torsional rigidity calculated by the rigidity calculation unit 122. The objective function varies depending on a structure, and a characteristic required for the structure by the user is input as the objective function.

The constraint condition stored in the structure model database 141 includes a defect detection probability. The structure model database 141 also holds a basic structure (for example, flatness of the surface near the defect, and the like) in which a predetermined detection probability (defect detection probability) is secured for a defect. For example, the structure data of a structure having a high defect detection probability is held in the structure model database 141.

### (Shape correction unit 142)

The shape correction unit 142 corrects the shape information of the shape model 300 under the required characteristics with reference to the information stored in the structure model database 141, the information regarding the rigidity calculated by the rigidity calculation unit 122 (flexural rigidity or torsional rigidity), and the defect detection probability calculated by the detection probability calculation unit 135. Specifically, when the shape information of the shape model 300 is corrected, the shape model 300 itself is corrected, and the shape model 300 is deformed. The corrected shape model 300 is stored in the model database 114 in the input/output unit 110.

In this manner, the shape correction unit 142 performs shape optimization. As a shape optimization method, for example, there is topology optimization. In the topology optimization, in a case where the rigidity does not satisfy the objective function, the shape model 300 is corrected by assigning a material or member with higher rigidity. In a case where it is determined that the defect detection probability does not satisfy the required characteristics, the shape model 300 is corrected by flattening the surface shape or the like so that the number of candidates for the installation position of the sensor increases on the basis of the inspection database 133. As described above, the shape correction unit 142 corrects the shape model 300 on the basis of the defect detection probability.

A known algorithm called a density method can be used as one of the topology optimization. In the topology optimization based on the density method, the density is reduced for an element having a small contribution degree to the rigidity of the structure among elements (each mesh region) constituting the FEM model.

The design supporting device 1 repeats the structural analysis in the structural analysis unit 120, the defect detection probability in the inspection analysis unit 130, and the shape correction in the optimization unit 140 until the required characteristics (constraint condition, objective function) are satisfied. As a result, it is possible to obtain an optimized structural property of a structure that achieves weight reduction within a range in which desired rigidity can be secured while removing unnecessary elements of the structure while securing inspectability. The obtained optimized structural property is output by the shape output unit 113.

### (Flowchart)

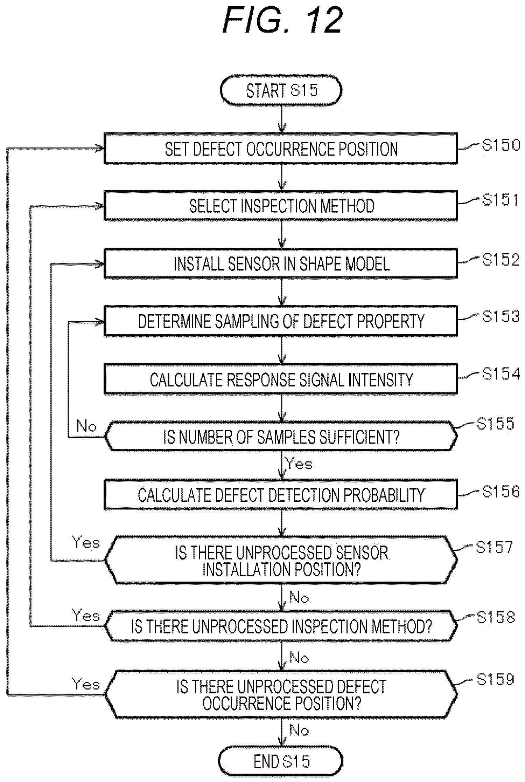

Next, processing performed by the design supporting device 1 according to the present embodiment will be described with reference to FIGS. 11 and 12.

### (Overall flowchart)

FIG. 11 is an overall flowchart illustrating a procedure of the design supporting method according to the present embodiment.

The design supporting method illustrated in FIG. 11 is realized, for example, by the CPU 152 reading a design supporting program stored in the auxiliary storage device 153 into the main storage device 151 and executing information processing/arithmetic processing. FIGS. 1 to 10 will be referred to as appropriate.

First, the user inputs the CAD data 200 (S11).

Next, the shape conversion unit 112 converts the input CAD data 200 into the shape model 300 (mesh model: see FIG. 3B) and stores the shape model in the shape conversion unit 112 itself (S12). The processing in step S12 is the processing described with reference to FIGS. 3A and 3B.

Subsequently, an inspection database (DB) 133, a defect database (DB) 131, and a structure model database (DB) 141 to be used in the subsequent calculation are set (S13). The user may input an arbitrary value via the input device 154 (see FIG. 2). For example, a candidate list of data stored in the inspection database 133, the defect database 131, and the structure model database 141 may be prepared in advance by experiment or the like, the user may select a candidate from among the candidates, and the user may set the inspection database (DB) 133, the defect database (DB) 131, and the structure model database (DB) 141. In this flowchart, the inspection database 133, the defect database 131, and the structure model database 141 are set in step S13, but the inspection database 133, the defect database 131, and the structure model database 141 may be set in advance before step S11 is started.

Next, the structural analysis unit 120 calculates the rigidity and the local stress in the shape model 300 (S14). The processing in step S14 is the processing described in FIG. 4.

Then, the inspection analysis unit 130 calculates the defect detection probability with reference to the inspection database 133, the defect database 131, the local stress, and the like (S15). The detailed procedure of step S15 will be described later.

Then, the optimization unit 140 determines whether the current shape model 300 satisfies the required characteristics stored in the structure model database 141 (S16). Whether the required characteristics are satisfied is specifically, for example, whether the defect detection probability is a predetermined value or more.

In a case where it is determined that the required characteristics are not satisfied (S16 → No), the shape correction unit 142 corrects the shape model 300 (S17: shape model correction step). Specifically, the shape correction unit 142 corrects the shape model 300 with reference to the structure model database 141, the rigidity, and the defect detection probability for the element in the shape model 300 determined not to satisfy the required characteristics. More specifically, the shape correction unit 142 corrects the shape model 300 so that the rigidity of the structure calculated by the rigidity calculation unit 122 satisfies an objective function that is a predetermined condition. That is, the shape correction unit 142 corrects the shape model 300 by a method such as topology optimization with reference to the rigidity calculated by the rigidity calculation unit 122, the defect detection probability calculated by the detection probability calculation unit 135, and the structure model database 141.

After the shape model 300 is corrected in step S17, the design supporting device 1 returns the process to step S14, the structural analysis unit 120 calculates the rigidity and the local stress again, the inspection analysis unit 130 calculates the defect detection probability, and the optimization unit 140 determines whether the current shape model 300 satisfies the required characteristics.

In step S16, the shape model 300 is corrected until it is determined that the required characteristics are satisfied.

Then, in step S16, in a case where it is determined that the required characteristics are satisfied (S16 → Yes), the shape correction unit 142 determines the current shape model 300 as the final shape. The shape model 300 determined as the final shape is stored in the model database 114.

Then, the shape output unit 113 displays the final shape model 300 (the shape model 300 corrected by the shape correction unit 142), which is the shape model 300 determined as the final shape, on the display device 155 (S18). The display method in step S18 will be described later.

### (Calculation of detection probability)

Next, the detailed procedure of the calculation of the defect detection probability performed in step S15 of FIG. 11 will be described with reference to FIG. 12.

FIG. 12 is a flowchart illustrating a procedure of calculating a defect detection probability according to the present embodiment.

First, the defect imparting unit 132 sets a defect occurrence position (S150: defect setting step). The processing in step S150 has been described with reference to FIGS. 5 and 6.

The defect occurrence position may be selected manually by the user as described above, or may be automatically selected by the defect imparting unit 132. In a case where the defect imparting unit 132 automatically selects the defect occurrence position, as described above, on the basis of the stress distribution calculated in step S14 in FIG. 11, the defect imparting unit 132 selects a defect occurrence position on the basis of a quantitative index indicating that a defect may occur, such as a stress concentration coefficient, a stress expansion coefficient, or a maximum value of equivalent stress, and a defect type of the defect database 131. The defect type may be selected on the basis of a database (not illustrated) or the like in which a quantitative index indicating that a defect may occur, such as a stress concentration coefficient, a stress expansion coefficient, or a maximum value of equivalent stress, is associated with the defect type. In step S150, no statistical fluctuation is set to the defect occurrence position.

Subsequently, the user selects an inspection method suitable for the defect occurring at the defect occurrence position set in step S150 via the input device 154 (S151). The processing in step S151 is performed by manual input by the user. The user may refer to the inspection database 133 when selecting a sensor. When the user selects the inspection method, the sensor type used by the inspection database 133 is also determined.

Next, the inspection signal calculation unit 134 specifies a position (installable position) where the sensor can be installed. At this time, the inspection signal calculation unit 134 refers to sensor setting conditions such as the position (defect occurrence position) of the defect selected in step S150, the inspection method selected in step S151, a sensor (sensor candidate) corresponding to the inspection method, and an installable condition of the inspection database 133 (see FIG. 7: sensor installation condition) with respect to the shape model 300a having the defect. The inspection signal calculation unit 134 specifies the installable position by using a method such as optimization calculation. As described above, a plurality of installable positions may be specified (installation positions of a plurality of sensors). In a case where a plurality of installable positions are specified, the inspection signal calculation unit 134 selects one sensor installation position SE (see FIGS. 8A and 8B) from the plurality of installable positions, and virtually installs (sets) the sensor in the shape model 300a (S152: inspection analysis step).

Then, the defect imparting unit 132 samples a defect property and determines the defect property (S153). As described above, the defect property is a size, a position, an angle, and the like of a defect such as a crack. On the basis of the probability distribution for each defect property registered in the defect database 131, the defect imparting unit 132 randomly samples the size of the defect, the deviation of the angle, and the deviation from the position selected in step S150. That is, the defect imparting unit 132 randomly samples defect properties such as a size, a position, and an angle of the defect. In the present embodiment, random sampling is appropriately referred to as sampling. Thereafter, the defect imparting unit 132 imparts the sampled defect property to the defect occurrence position selected in step S150. Further, the defect imparting unit 132 determines the defect property by setting the size of the defect itself to the sampled size. In this manner, the defect imparting unit 132 sets the defect property randomly sampled for the defect.

Next, the inspection signal calculation unit 134 calculates the response signal intensity acquired by the sensor (S154: inspection analysis step). At this time, the inspection signal calculation unit 134 refers to the following information.

(A1) A sensor (Eddy current sensor, ultrasonic sensor, distance measurement sensor, and the like) selected in step S151.

(A2) A sensor installation position SE installed in step S152 (see FIGS. 8A and 8B).

(A3) A defect property randomly sampled in step S153.

In step S154, the inspection signal calculation unit 134 simulates the response signal intensity (acquired response signal intensity) of the sensor on the basis of each of the conditions (A1) to (A3). As the simulation method, electromagnetic calculation, ultrasonic propagation analysis, heat and light propagation calculation, and the like are appropriately selected according to the inspection method. The processing in steps S152 to S154 has been described with reference to FIGS. 7 to 9.

Subsequently, the inspection signal calculation unit 134 determines whether the number of samples of the response signal intensity acquired in step S154 is sufficient (S155). That is, the inspection signal calculation unit 134 determines whether the response signal intensity calculation of a sufficient number of samples has been performed in the estimation of the defect detection probability described later. Whether the number of samples is sufficient is determined by the following method (B1) or (B2).

(B1) The user directly inputs the number of samples considered to be sufficient in advance, and the inspection signal calculation unit 134 determines whether the number of samples has been reached.

(B2) The inspection signal calculation unit 134 determines whether the confidence interval of the estimated value of the defect detection probability falls within a range designated in advance by the user. However, in a case where the method of (B2) is performed, the determination of step S155 may be performed after the defect detection probability is calculated in step S156.

In a case where it is determined that the calculation of a sufficient number of samples has not been performed (S155 → No), the inspection signal calculation unit 134 returns to the processing of step S153 and samples again and determines the defect property. That is, the setting of the defect property by the sampling of the defect property by the defect imparting unit 132 and the simulation by the inspection signal calculation unit 134 are repeatedly executed.

In a case where it is determined that the calculation of a sufficient number of samples has been calculated (S155 → Yes), the detection probability calculation unit 135 calculates a defect detection probability on the basis of the response signal intensity of the sensor calculated up to step S155 (S156: inspection analysis step). **In** step S156, the signal intensity distribution as illustrated in FIG. 9 is used. As described above, a maximum likelihood estimation method such as a Berans method or a Hit/Miss method is known as a method of estimating the defect detection probability using the signal intensity distribution as illustrated in FIG. 9. As described above, the detection threshold (see FIG. 7) designated in advance in the inspection database 133 is referred to as the threshold (the lower limit of the response signal intensity determined to be detected by the sensor) used at this time. The processing in step S156 has been described with reference to FIG. 10.

Subsequently, the inspection analysis unit 130 determines whether there is an unprocessed sensor installation position SE for the sensor to be calculated (S157). The installation position of the unprocessed sensor is the installable position not selected in step S152.

**In** a case where there is an unprocessed sensor installation position SE (step S157 → Yes), the inspection analysis unit 130 returns the processing to step S152. That is, the inspection signal calculation unit 134 calculates the response of the virtual sensor with respect to the installation positions of the plurality of sensors, and the detection probability calculation unit 135 calculates the defect detection probability with respect to the installation position of each sensor.

In a case where there is no unprocessed sensor installation position SE (S157 → No), the inspection analysis unit 130 determines whether there is an unprocessed inspection method (S158).

In a case where there is an unprocessed inspection method (step S158 → Yes), the inspection analysis unit 130 returns the processing to step S151.

In a case where there is no unprocessed inspection method (S158 → No), the inspection analysis unit 130 determines whether there is an unprocessed defect occurrence position (S159).

In a case where there is an unprocessed defect occurrence position (step 159 → Yes), the inspection analysis unit 130 returns the processing to step S150.

In a case where there is no unprocessed defect occurrence position (step S159 → No), the inspection analysis unit 130 ends the processing of step S15 of FIG. 11, and the optimization unit 140 performs step S16 of FIG. 11.

With the processing of FIG. 12 being performed, the inspection analysis unit 130 calculates the defect detection probability on the basis of a predetermined defect occurrence position, a predetermined inspection method, and a predetermined sensor arrangement each time step S156 is performed.

Then, the inspection analysis unit 130 calculates all the defect detection probabilities necessary for determining the constraint conditions to be used by the optimization unit 140 at the time of exiting the repetitive processing of steps S150 to S159.

### (Display screen)

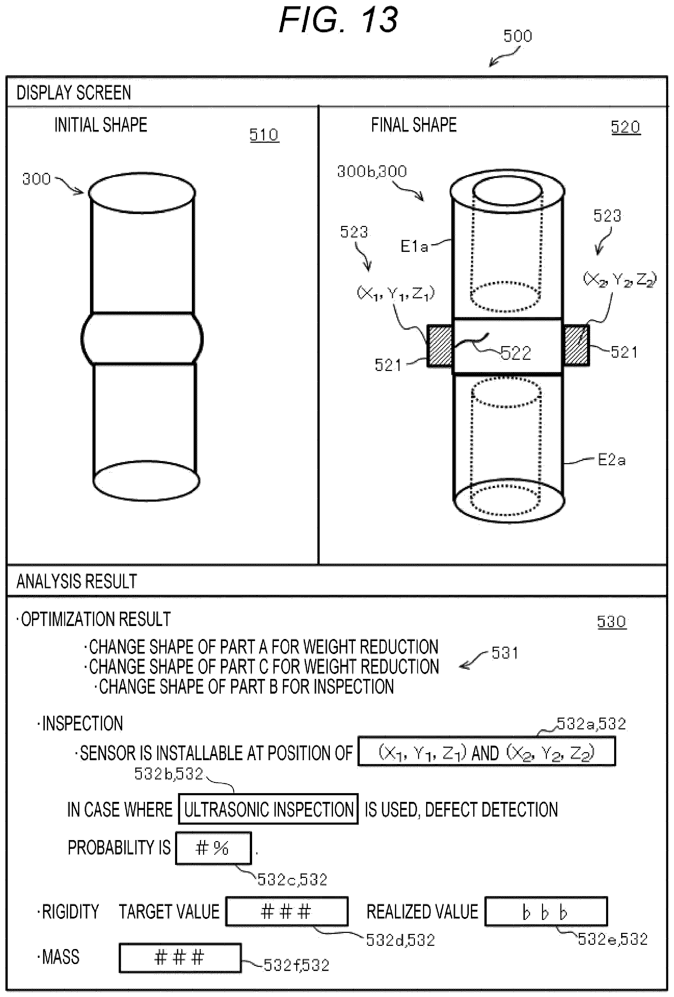

Finally, a display screen 500 in the design supporting device 1 according to the present embodiment will be described with reference to FIG. 13.

FIG. 13 is a diagram illustrating an example of the display screen 500.

In step S18 of FIG. 11, the input/output unit 110 displays the sensor arrangement position, the initial shape of the shape model 300, and the final shape of the shape model 300 on the display screen 500 illustrated in FIG. 13. The initial shape is the shape model 300 before the shape correction by the optimization unit 140 is performed, and the final shape is the shape model 300 after the shape correction by the optimization unit 140 is completed. Specifically, the input/output unit 110 displays the display screen 500 illustrated in FIG. 13 on the display device 155 (see FIG. 2).

The display screen 500 has an initial shape display area 510, a final shape display area 520, and an analysis result display area 530.

In the initial shape display area 510, the initial shape (see FIG. 3B) of the shape model 300 corresponding to the CAD data 200 input by the user in step S11 of FIG. 11 is displayed. That is, as described above, the shape model 300 before shape correction by the optimization unit 140 is performed is displayed in the initial shape display area 510.

In the final shape display area 520, the final shape (the corrected shape model 300b (300)) of the shape model 300 when it is determined that the required characteristics are satisfied in step S16 of FIG. 11 (S16 → Yes) is displayed.

Further, in the final shape display area 520, a sensor arrangement (reference numeral 521) having the largest defect detection probability among the plurality of installable positions (sensor installation positions) is displayed (information regarding the sensor installation position having the largest defect detection probability). The installable position is calculated in step S152 in FIG. 12. The high defect detection probability means that, for example, the curve of the defect detection probability illustrated in FIG. 10 rises from a small defect size. In the example illustrated in FIG. 13, two installation positions (reference numeral 521) are illustrated as the installation positions of the sensor having the best defect detection probability. Incidentally, reference numeral 522 in the structure illustrated in the final shape display area 520 is a defect (a crack in the example of FIG. 13). A coordinate display unit 523 is a coordinate of the installation position of the sensor having the best defect detection probability (information regarding the installation position of the sensor having the highest defect detection probability). In order to display the sensor arrangement (reference numeral 521) having the largest defect detection probability among the plurality of sensor positions, the processing of FIGS. 11 and 12 is performed for each of the plurality of sensor positions.

The shape model 300b displayed in the final shape display area 520 is reduced in weight by cutting out the inside of the structures indicated by reference numerals E1a and E2a.

Further, in the analysis result display area 530, an optimization result display area 531, an installation position of the sensor (display window 532a (532)), an adopted inspection method (display window 532b (532)), and a defect detection probability to be achieved as a result of correction of the shape model 300 (display window 532c (532)) are displayed. The defect detection probability displayed in the display window 532c is a defect detection probability in a case where a sensor is installed at reference numeral 521 in the final shape display area 520. That is, the defect detection probability is the largest among a plurality of installable positions (installation positions of a plurality of sensors).

In the optimization result display area 531, a change history of the shape model 300 performed by the shape correction unit 142 is displayed. In the optimization result display area 531, the "part A" is the component E1 in FIG. 3B, the "part B" is the component E2 in FIG. 3B, and the "part C" is the welded portion W in FIG. 3B.

The installation position of the sensor displayed in the display window 532a indicates coordinate information (that is, the coordinate information displayed on the coordinate display unit 523 in the final shape display area 520) related to the installation position (reference numeral 521) of the sensor indicated in the final shape display area 520. The inspection method selected in step S151 of FIG. 12 is displayed in the display window 532b. The defect detection probability displayed in the display window 532c is the defect detection probability when the sensor is installed at the installation position (reference numeral 521) of the sensor indicated in the final shape display area 520. The defect detection probability displayed in the display window 532c is calculated as a probability at which a defect having a preset size is detected from the curve of the defect detection probability illustrated in FIG. 10, for example.

In the analysis result display area 530, the target value of the rigidity (display window 532d (532)), a realized value of the rigidity (display window 532e (532)) realized in the final shape (the corrected shape model 300b), and the mass of the structure (the structure for the modified shape model 300b) in the final shape (display window 532f (532)) are displayed. Each piece of information displayed in the analysis result display area 530 is information necessary for the user to determine whether the processing by the design supporting device 1 is satisfactory and reflect the information in the actual inspection plan. The target value (display window 532d) of the rigidity is one of the objective functions and is stored in the structure model database 141. The shape output unit 113 calculates the realized value of the rigidity and the mass from a shape model 300b of the final shape. Each piece of information displayed in an analysis result display area 530 can be recorded in the auxiliary storage device 153 (for example, the model database 114).

More generally, when the user clicks one of the display windows 532a to 532d, the clicked display window 532 becomes blank, and the user may input a value to the blank display window 532. For example, the user inputs the installation position of the sensor in the blank display window 532a. Alternatively, the user inputs the inspection method to the blank display window 532b. Then, the design supporting device 1 carries out the processing illustrated in FIG. 11 based on the data input into the blank display window 532. Then, the shape output unit 113 displays, in each display window 532, data other than the newly input data among the results of performing the processing illustrated in FIG. 11. For example, in a case where the user inputs the installation position of the sensor in the display window 532a, data other than the installation position of the sensor is displayed in the display windows 532b to 532f. In a case where the user inputs the installation position of the sensor to the display window 532a, in step S152 of FIG. 12, the setting of the installation position of the sensor by optimization is not performed, and the installation position of the sensor input to the display window 532a is set as it is.

According to such a design supporting device 1, it is possible to quantitatively evaluate an index of inspectability and present a shape of a structure that is easy to inspect in consideration of non-destructive inspection to a designer. This makes it possible to support the design.

That is, according to such a design supporting device 1, the index of inspectability is quantitatively evaluated by the defect detection probability. In this way, when the shape of the structure is determined, an index (sensor installation propriety, defect detection probability) regarding future inspectability is added, and the shape model 300 of the structure that is easy to inspect in consideration of the non-destructive inspection can be presented to the designer, and the design can be supported.

The defect property is randomly sampled on the basis of the probability distribution of the defect property stored in the defect database 131, so that it is possible to calculate the response signal intensity using quantitative Monte Carlo calculation. Virtual installation of the sensor is performed on the basis of the inspection database 133 in which an inspection method, a sensor type, a specification of the sensor, an installable condition of the sensor, and the like are stored, so that it is possible to virtually install a realistic sensor.

The defect is set on the basis of the local stress, so that the defect can be set at a position where the defect is actually likely to occur. The shape correction unit 142 corrects the shape model 300 on the basis of the rigidity of the structure calculated by the rigidity calculation unit 122, so that the shape model 300 can be corrected in consideration of the rigidity.

By displaying the display screen 500 as illustrated in FIG. 13, the user can confirm a correction result or the like of the shape model 300 obtained by the design supporting method.

The present invention is not limited to the embodiments described above, but includes various modifications. For example, the above embodiments have been described in detail for easy understanding of the present invention, and the invention is not necessarily limited to having all the configurations described.

Each of the above configurations, functions, processing units, processing means, and the like may be partially or entirely achieved by hardware by, for example, designing by an integrated circuit. The configurations and the functions may be realized in software such that a processor analyzes and performs a program which realizes each function. Information such as a program, a table, and a file for achieving each function can be stored in a recording device such as a memory, a hard disk, or a solid-state drive (SSD), or a recording medium such as an integrated circuit (IC) card, a secure digital (SD) card, or a digital versatile disc (DVD).

The control lines and the information lines are illustrated which are considered as necessary for explanation, and it does not mean that all the control lines and the information lines are necessarily illustrated for a product. In practice, almost all the configurations may be connected to each other.

### Reference Signs List

1 design supporting device
110 input/output unit
111 CAD data input processing unit
112 shape conversion unit
113 shape output unit
114 model database
120 structural analysis unit
121 structure calculation unit
122 rigidity calculation unit
123 local stress calculation unit
130 inspection analysis unit
131 defect database
132 defect imparting unit (defect setting unit)
133 inspection database
134 inspection signal calculation unit
135 detection probability calculation unit
140 optimization unit (shape model correction unit)
141 structure model database
142 shape correction unit (shape model correction unit)
154 input device
155 display device (output unit)
156 communication interface
200 CAD data
300 shape model
300a shape model
300b shape model
400 stress analysis result
500 display screen
510 initial shape display area
520 final shape display area
523 coordinate display unit
530 analysis result display area
531 optimization result display area
532 display window
532a display window
532b display window
532c display window
532d display window
532e display window
532f display window
B boundary
C crack
E1 component
E1a reference numeral
E2 component
E2a reference numeral
SE sensor installation position (virtual installation position of sensor unit)
W welding portion
S17 correction of shape model (shape model correction step)
S150 set defect occurrence position (defect setting step)
S152 select sensor as shape model (inspection analysis step)
S154 calculate response signal intensity (inspection analysis step)
S156 calculate defect detection probability (inspection analysis step)

## Claims

1. A design supporting device comprising:
a defect setting unit that sets a defect in a shape model of a structure;
an inspection analysis unit that virtually sets a sensor unit for inspecting the set defect with respect to the shape model on a basis of a sensor unit setting condition that is a predetermined condition, and calculates a defect detection probability that is a probability of detecting the defect by performing an inspection simulation of the defect by the virtually set sensor unit for each defect property indicating a property of the defect; and
a shape model correction unit that corrects the shape model on a basis of the defect detection probability.

2. The design supporting device according to claim 1, wherein
the defect property is at least a size, a position, and an angle of the defect,
a defect database that holds a probability distribution for each defect property is provided,
the defect setting unit randomly samples the defect property on a basis of a probability distribution of the defect property to set the randomly sampled defect property, and
the inspection analysis unit calculates the defect detection probability by statistically analyzing a virtual response of the sensor unit obtained as a result of repeatedly executing setting of the defect property by the random sampling of the defect property by the defect setting unit and the inspection simulation by the inspection analysis unit.

3. The design supporting device according to claim 1, comprising:
an inspection database that stores an inspection method, a candidate of the sensor unit that can be used in the inspection method, and an installation condition of the sensor unit, wherein
the inspection analysis unit virtually sets the sensor unit for the shape model having the defect set by the defect setting unit with the inspection method, a candidate of the sensor unit, and an installation condition of the sensor unit as the sensor unit setting condition, and calculates a response to the defect by the virtually set sensor unit by the inspection simulation.

4. The design supporting device according to claim 1, comprising:
a local stress calculation unit that calculates local stress in the structure on a basis of the shape model, wherein
the defect setting unit sets an occurrence position of the defect on a basis of the local stress of the structure calculated by the local stress calculation unit.

5. The design supporting device according to claim 1, comprising:
a rigidity calculation unit that calculates rigidity of the structure that is a base of the shape model, wherein
the shape model correction unit corrects the shape model so that rigidity of the structure calculated by the rigidity calculation unit satisfies a required condition that is a predetermined condition.

6. The design supporting device according to claim 5, comprising:
an output unit that outputs the shape model corrected by the shape model correction unit, wherein
the inspection analysis unit calculates a response of the virtual sensor unit with respect to installation positions of a plurality of the sensor units,
the inspection analysis unit calculates the defect detection probability for each installation position of the sensor unit, and
information regarding an installation position of the sensor unit having a largest defect detection probability among installation positions of a plurality of the sensor units, an inspection method, the largest defect detection probability among installation positions of a plurality of the sensor units, a mass of the structure with respect to the corrected shape model, a rigidity value with respect to the corrected shape model, and a target value of the rigidity value are output to the output unit together with the corrected shape model.

7. A design supporting method causing a design supporting device to execute:
setting a defect in a shape model of a structure;
virtually setting a sensor unit for inspecting the set defect with respect to the shape model on a basis of a sensor unit setting condition that is a predetermined condition, and calculating a defect detection probability that is a probability of detecting the defect by performing an inspection simulation of the defect by the virtually set sensor unit for each defect property indicating a property of the defect; and
correcting the shape model on a basis of the defect detection probability.
